# EUROPÄISCHE PATENTSCHRIFT

(11) **EP 2 128 329 B1**
(45) Veröffentlichungstag und Bekanntmachung des Hinweises auf die Patenterteilung: **06.07.2016**
(21) Anmeldenummer: 09006160.7
(22) Anmeldetag: 06.05.2009
(51) Int. Cl.: D06F 93/00, B65G 47/00

(54) **Verfahren und Vorrichtung zum Sortieren von an Transportbügeln hängenden Bekleidungsstücken**
Method and device for sorting items of clothing hanging on transport hangers
Procédé et dispositif de tri de pièces d'habillement suspendues sur des barres de transport

(30) Priorität: 30.05.2008 DE 102008025975
(43) Veröffentlichungstag der Anmeldung: 02.12.2009
(73) Patentinhaber: Herbert Kannegiesser GmbH, 32602 Vlotho (DE)
(72) Erfinder: Littmann, Dirk, 32108 Bad Sulzuflen (DE); Thoma, Alexander, 86399 Bobingen (DE)
(74) Vertreter: Möller, Friedrich

(56) Entgegenhaltungen:
- EP-A- 0 775 771
- EP-A1- 1 531 133
- EP-A2- 0 372 906
- EP-B1- 1 037 830
- DE-A1- 4 423 082
- US-A1- 2006 177 291

## Beschreibung

Die Erfindung betrifft ein Verfahren zum Sortieren von an Transportbügeln hängenden Bekleidungsstücken nach dem Oberbegriff des Anspruchs 1. Des Weiteren betrifft die Erfindung eine Vorrichtung zum Sortieren von an Transportbügeln hängenden Bekleidungsstücken gemäß dem Oberbegriff des Anspruchs 6.

Bekleidungsstücke werden in Wäschereien in Abhängigkeit von ihrer Art unterschiedlich behandelt, insbesondere gewaschen. Die in beliebiger Aufeinanderfolge angelieferten Bekleidungsstücke müssen zunächst sortiert werden, damit sie gezielt der vorgesehenen Behandlung zugeführt werden können. Außerdem werden die gewaschenen Bekleidungsstücke vor der Auslieferung zum Beispiel kundenspezifisch sortiert.

Es ist bekannt, die Bekleidungsstücke an Transportbügeln hängend längs eines Schienensystems weiterzutransportieren und dabei zu sortieren. Das Sortieren erfolgt anhand von jedem Bekleidungsstück zugeordneten Daten. Die individuellen Daten des Bekleidungsstücks befinden sich auf einem Datenspeicher, der entweder dem Bekleidungsstück oder dem dieses tragenden Transportbügel zugeordnet ist. Von einer Leseeinrichtung werden die relevanten Daten aus dem Datenspeicher ausgelesen und danach durch entsprechendes Verfahren der Transportbügel längs des Schienensystems die Bekleidungsstücke sortiert. Um die Daten auslesen und die an Transportbügeln hängenden Bekleidungsstücke durch Weichen im Schienensystem sortieren zu können, müssen die Transportbügel einen verhältnismäßig großen Abstand zueinander aufweisen. Das wirkt sich nachteilig auf die Sortierleistung aus.

Nach US 2006/0177291 A1 werden Objekte zur Identikation mit jeweils einem transmitting part versehen. Die Objekte werden mitsamt der transmitting parts zur Identifikation durch den identification apparatus, bestehend aus dem activation part, dem receiving part und dem variation device, bewegt. Der activation part aktiviert den transmitting part, woraufhin dieser ein Signalcode aussendet, welcher von dem receiving part gemessen wird und der Identifikation dient. Mit dem activation part wird die relative Ausrichtung des das Signal aussendende transmitting part und dem receiving part gesteuert.

Der Erfindung liegt die Aufgabe zugrunde, ein Verfahren und eine Vorrichtung zum Sortieren von an Transportbügeln hängenden Bekleidungsstücken zu schaffen, womit die Sortierleistung ohne Einbußen der Sortierqualität sich erhöhen lässt.

Ein Verfahren zur Lösung dieser Aufgabe weist die Maßnahmen des Anspruchs 1 auf. Demnach ist vorgesehen, dass die Leseeinrichtung mit einer Frequenz von mindestens 1 MHz betrieben wird. Bei dieser Frequenz handelt es sich um die Übertragungsfrequenz der drahtlos arbeitenden Leseeinrichtung. Bevorzugt weist die Leseeinrichtung eine Antenne und ein Lesegerät auf, wobei die Antenne die relevanten Daten aus dem Datenspeicher drahtlos, insbesondere per Funk, mit der Übertragungsgeschwindigkeit von mindestens 1 MHz ausliest und an das Lesegerät entweder drahtlos oder per Kabel überträgt, vorzugsweise mit einer gleichermaßen hohen Frequenz von mindestens 1 MHz. Durch die verhältnismäßig hohe Übertragungsgeschwindigkeit der Leseeinrichtung ist es möglich, die Antenne der Leseeinrichtung zu verkleinern. Dadurch und vor allem wegen der hohen Frequenz, womit die Leseeinrichtung arbeitet, können zuverlässig und sehr rasch auch Daten aus den Datenspeichern ausgelesen werden, wenn die Transportbügel mit den daran hängenden Bekleidungsstücken dicht aufeinanderfolgen. Es ist des Weiteren vorgesehen, die Transportbügel mit den daran hängenden Bekleidungsstücken und einer solchen Transportgeschwindigkeit kontinuierlich weiterzutransportieren, dass zumindest an der Leseeinrichtung bis zu 300 Transportbügel pro Minute, vorzugsweise 150 bis 250 Transportbügel pro Minute, entlanglaufen. Dementsprechend hoch ist die Sortierleistung, die mit dem erfindungsgemäßen Verfahren erzielbar ist.

Verfahrensmäßig ist weiterhin vorgesehen, die Transportbügel mit geringem Abstand an der Leseeinrichtung, insbesondere der Antenne derselben, vorbeizutransportieren. Dadurch kann schon ohne eine Erhöhung der Transportgeschwindigkeit eine größere Anzahl von Transportbügeln mit daran hängenden Bekleidungsstücken pro Zeiteinheit an der Leseeinrichtung, insbesondere der Antenne derselben, vorbeibewegt werden. Allein das führt schon zu einer Erhöhung der Sortierleistung. Die Sortierleistung kann auch weiter gesteigert werden, wenn wegen der höheren Frequenz, womit die Leseeinrichtung arbeitet, von der Möglichkeit der Erhöhung der Geschwindigkeit, womit die Transportbügel mit den daran hängenden Bekleidungsstücken an insbesondere der Antenne der Leseeinrichtung vorbeibewegt werden, Gebrauch gemacht wird. Darüber hinaus ermöglicht die dichte Aufeinanderfolge der Transportbügel entweder eine Verkleinerung des Schienensystems oder eine Vergrößerung der Anzahl der im Bereich des Schienensystems unterbringbaren Bekleidungsstücke.

Bevorzugt ist vorgesehen, dass die Transportbügel mit den daran hängenden Bekleidungsstücken zumindest im Bereich der Leseeinrichtung einen Abstand von maximal 180 mm aufweisen. Bevorzugt beträgt der Abstand nur 50 mm bis 150 mm. Demgegenüber war es bei bekannten Verfahren und Vorrichtungen üblich, die Transportbügel in einem Abstand von über 200 mm aufeinanderfolgen zu lassen. Die Erfindung ermöglicht somit eine deutliche Reduzierung des Abstands der Transportbügel. Dieser Abstand kann auf die Hälfte des bisher üblichen oder sogar darunter reduziert werden. Demzufolge wird die Aufnahmekapazität des Schienensystems mindestens verdoppelt und es werden bei unveränderter Transportgeschwindigkeit mindestens doppelt so viele Transportbügel mit daran hängenden Bekleidungsstücken sortiert.

Es ist bevorzugt vorgesehen, dass die von der Leseeinrichtung zum Sortieren der Bekleidungsstücke benötigten Daten während des kontinuierlichen Vorbeitransports der Transportbügel mit den daran hängenden Bekleidungsstücken an der Leseeinrichtung aus dem Datenspeicher des jeweiligen Transportbügels oder Bekleidungsstücks ausgelesen werden. Die Transportbügel können so in einem ständigen Fluss an der Leseinrichtung vorbeibewegt werden, wodurch keine unnötigen Verzögerungen eintreten. Vor allem führt der ununterbrochene Weitertransport der Transportbügel dazu, dass diese und die daran hängenden Bekleidungsstücke sich nur wenig bewegen, was ein rasches und zuverlässiges Auslesen der Daten begünstigt.

Gemäß einer bevorzugten Ausgestaltung des Verfahrens ist es vorgesehen, die Transportbügel nicht nur mit geringem Abstand an der Leseeinrichtung entlang zu transportieren, sondern auch an der jeweiligen Weiche. Demzufolge sieht das erfindungsgemäße Verfahren nicht nur einen erhöhten Durchsatz an an Transportbügeln hängenden Bekleidungsstücken im Bereich der jeweiligen Leseeinrichtung vor, sondern auch im Bereich der Weichen. Es können so nach dem erfindungsgemäßen Verfahren die Transportbügel mit einer gleichbleibenden Transportgeschwindigkeit kontinuierlich längs des Schienensystems weiterbewegt werden, ohne dass an bestimmten Stellen Engpässe entstehen. Dadurch ist gewährleistet, dass der gesamte Sortiervorgang mit einer erhöhten Sortierleistung gegenüber bisherigen Verfahren durchführbar ist. Dabei kommt es nicht zu Einbußen der Sortierqualität, weil die Erfindung sich nicht darauf beschränkt, die Transportgeschwindigkeit der Transportbügel mit den daran hängenden Bekleidungsstücken zu erhöhen. Die dichtere Aufeinanderfolge der Transportbügel hat schon eine höhere Sortierleistung zur Folge, insbesondere mit der höheren Frequenz der Leseeinrichtung, und zwar vor allem der Antenne.

Eine Vorrichtung zur Lösung der eingangs genannten Aufgabe weist die Merkmale des Anspruchs 6 auf. Demnach ist mindestens eine Leseeinrichtung vorgesehen, die mit einer Frequenz von wenigstens 1 MHz arbeitet. Diese hohe Frequenz, bei der es sich bevorzugt um die Übertragungsfrequenz handelt, lässt eine hohe Lesegeschwindigkeit und -genauigkeit zu. Das schafft eine Möglichkeit der Erhöhung der Sortierleistung, ohne dass darunter die Sortiergenauigkeit leidet. Der Leseeinrichtung ist ein Initiator zuzuordnen. Dieser kann verschiedene Funktionen erfüllen, und zwar gegebenenfalls auch gleichzeitig. Zum einen dient der Initiator dazu, das Auslesen relevanter Daten aus einem bestimmten Datenspeicher zu starten. Zum anderen führt der Initiator dazu, dass sich die ausgelesenen Daten dem dazugehörenden Transportbügel und dem darauf hängenden Bekleidungsstück zuordnen lassen.

Ein bevorzugtes Ausführungsbeispiel der Erfindung wird nachfolgend anhand der Zeichnung näher erläutert. In dieser zeigen:
- Fig. 1: eine schematische Draufsicht auf ein Schienensystem zum Sortieren der Bekleidungsstücke,

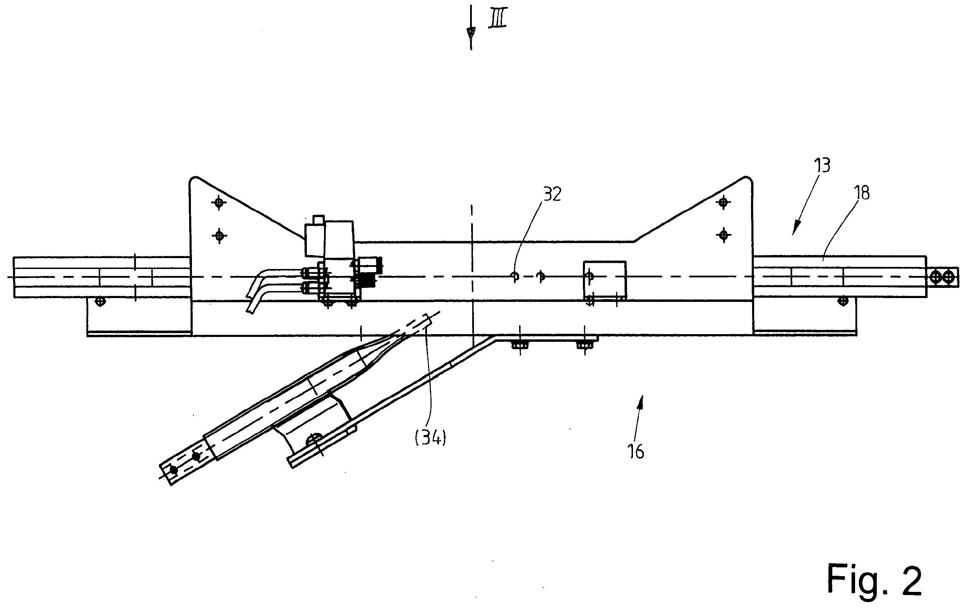

- Fig. 2: eine vergrößerte Einzelheit II aus der Fig. 1,
- Fig. 3: eine Seitenansicht der Einzelheit der Fig. 2 in Blickrichtung III,
- Fig. 4: einen Schnitt IV-IV gemäß der Fig. 1 in vergrößerter Darstellung, und
- Fig. 5: einen Schnitt V-V gemäß der Fig. 1.

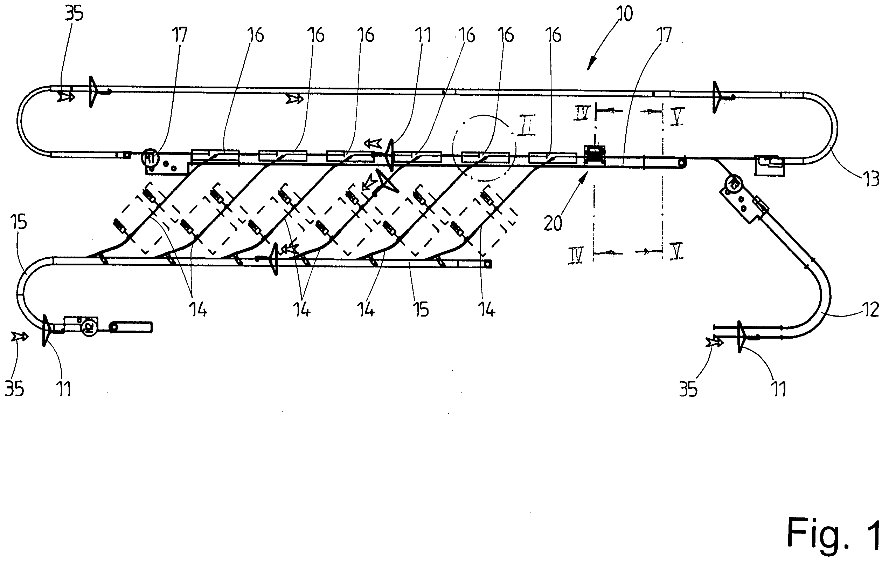

Die Fig. 1 zeigt exemplarisch ein mögliches Schienensystem 10 zum Sortieren von an Transportbügeln 11 hängenden Bekleidungsstücken. Bei den in den Figuren nicht gezeigten Bekleidungsstücken kann es sich um alle Arten von Bekleidungsstücken handeln, beispielsweise um Kittel, Jacken, Overalls, Hosen und dergleichen. Das Schienensystem kann sich im Bereich der Anlieferung der schmutzigen Bekleidungsstücke in der Wäscherei befinden. In diesem Falle werden die Bekleidungsstücke längs des Schienensystems 10 sortiert nach der Art ihrer Behandlung, insbesondere Wäsche. Das Schienensystem 10 kann aber auch am Ende der Behandlung der Bekleidungsstücke vorgesehen sein, um die zur Auslieferung fertigen Bekleidungsstücke nach Kunden oder Auslieferungstouren zu sortieren.

Das hier gezeigte Schienensystem 10 verfügt über eine Beladestrecke 12, an der jeweils ein Bekleidungsstück auf einen Transportbügel 11 aufgehängt und das am Transportbügel hängende Bekleidungsstück einer Umlaufstrecke 13 zugeführt wird. Von der Umlaufstrecke 13 zweigen mehrere Speicherstrecken 14 zur Aufnahme sortierter Bekleidungsstücke ab. Im gezeigten Ausführungsbeispiel sind sechs parallele Speicherstrecken 14 vorgesehen, die unter einem spitzen Winkel von der Umlaufstrecke 13 abzweigen. Die Erfindung ist auf die Anzahl und den Verlauf der Speicherstrecken 14 aber nicht beschränkt. Von den Speicherstrecken 14 werden die sortierten Bekleidungsstücke mit den Transportbügeln 11 zur Rückführstrecke 15 transportiert, um weiterbehandelt oder ausgeliefert zu werden. Dann werden die Bekleidungsstücke von den Transportbügeln 11 genommen. Die leeren Transportbügel 11 werden dann der Wiederverwendung zugeführt, beispielsweise am Anfang der Beladestrecke 12.

Dort, wo von der Umlaufstrecke 13 eine Speicherstrecke 14 abzweigt, befindet sich eine Weiche 16. Alle Weichen 16 sind vorzugsweise gleich ausgebildet. Mittels der jeweiligen Weiche 16 wird ein Transportbügel 11 mit einem daraufhängenden Bekleidungsstück aus der Umlaufstrecke 13 ausgeschleust auf die Speicherstrecke 14, die Transportbügel 11 mit gleiche Sortierkriterien erfüllende Bekleidungsstücke aufnimmt.

Das Schienensystem 10 ist als ein Förderer ausgebildet, so dass die Transportbügel 11 auf dem Schienensystem, insbesondere der Beladestrecke 12, der Umlaufstrecke 13, der jeweiligen Speicherstrecke 14 und der Rückführstrecke 15 weitertransportierbar sind. Dies geschieht entweder nach dem Prinzip der Schwerkraftförderung durch abwärts geneigte Abschnitte des Schienensystems 10 oder durch Antriebsstränge 17 im Bereich horizontaler oder ansteigender Abschnitte des Schienensystems 10. Beim gezeigten Schienensystem 10 werden die Transportbügel 11 mit oder ohne daran hängenden Bekleidungsstücken sowohl durch Schwerkraft als auch durch verschiedene Antriebsstränge 17 entlang des Schienensystems 10 transportiert.

Das Schienensystem 10 setzt sich aus mehreren Schienen bzw. Schienenabschnitten 18 zusammen. Im gezeigten Ausführungsbeispiel weisen die Schienenabschnitte 18 einen im Wesentlichen kreisförmigen Querschnitt auf, sind insbesondere als innen hohe Rohre ausgebildet. Der Durchmesser der Schienenabschnitte 18 ist so gewählt, dass darauf die Transportbügel 11 mit Bügelhaken 19 aufhängbar sind, so dass die Transportbügel 11 mit den Bügelhaken 19 an den Schienenabschnitten 18 angetrieben oder unangetrieben entlanggleiten können. Der Transportbügel 11 mit den Bekleidungsstücken hängen somit unter den Schienenabschnitten 18 des Schienensystems 10.

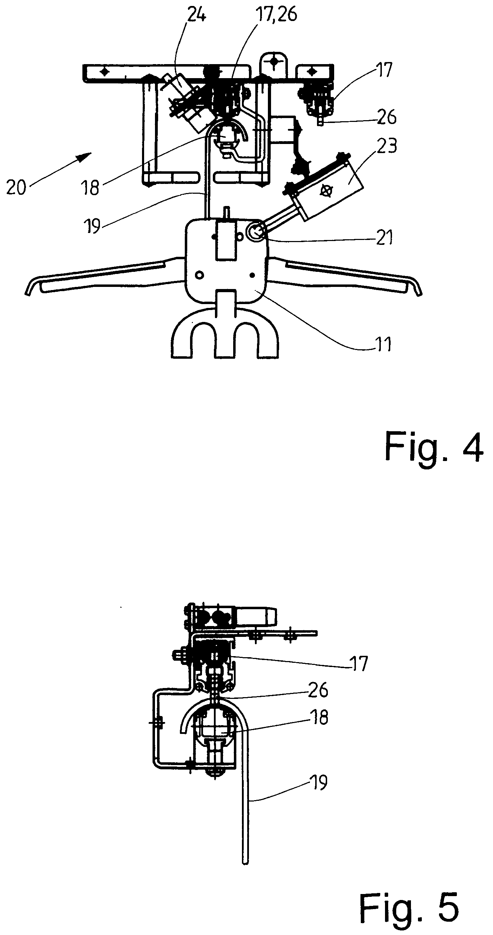

In Transportrichtung der Transportbügel 11 auf der Umlaufstrecke 13 vor der ersten Weiche 16 ist eine Leseeinrichtung 20 angeordnet. Die Leseeinrichtung 20 dient dazu, zum Sortieren der Bekleidungsstücke relevante Daten aus einem Datenspeicher 21 am jeweiligen Transportbügel 11 (Fig. 4) berührungslos, insbesondere durch Funkübertragung der Daten, auszulesen. Alternativ kann jeweils ein Datenspeicher 21 an einem am Transportbügel 11 hängenden Bekleidungsstück angeordnet sein.

Die Leseeinrichtung 20 verfügt über ein Lesegerät 22 und eine sogenannte Antenne 23. Die Antenne 23 aktiviert den sich jeweils in ihrem Bereich befindlichen Datenspeicher 21 und liest von diesem die für das Sortieren relevanten Daten aus. Diese Aktivierung und das Auslesen der Daten erfolgen drahtlos bzw. berührungslos per Funk. Von der Antenne 23 werden die Daten über ein Kabel oder auch per Funk an das ihr zugeordnete Lesegerät 22 übertragen. Vom Lesegerät 22 werden die Daten aufbereitet und einer Steuerung zugeführt, die die Weichen 16 betätigt, und zwar so, dass gezielt Transportbügel 11 mit daran hängenden Bekleidungsstücken, die die gleichen Sortierkriterien erfüllen, aus der Umlaufstrecke 13 ausgeschleust und auf die jeweilige Speicherstrecke 14 geleitet werden.

Die Antenne 23 ist derart neben dem entsprechenden Schienenabschnitt 18 der Umlaufstrecke 13 angeordnet, dass der beispielsweise als Transponder ausgebildete Datenspeicher 21 eines momentan an der Antenne 23 kontinuierlich vorbeilaufenden Transportbügels 11 mit einem daran hängenden Bekleidungsstück im Arbeitsbereich, nämlich einem Übertragungsfenster, der Antenne 23 sich befindet.

Im Bereich der Antenne 23 ist dem Schienenabschnitt 18 außerdem ein Initiator 24 zugeordnet. Dieser Initiator 24 detektiert das Vorbeilaufen eines Bügelhakens 19 eines Transportbügels 11 mit einem daran hängenden Bekleidungsstück. Dadurch kann das Vorhandensein eines Transportbügels 11 im Bereich der Antenne 23 festgestellt werden und das Auslegen relevanter Daten aus den Datenspeicher 21 dieses Transportbügels 11 erfolgen. Außerdem dient der Initiator 24 dazu, die aus dem Datenspeicher 21 ausgelesenen Daten einem bestimmten Transportbügel 11 zuzuordnen, wodurch genau dieser Transportbügel 11 mit dem daran hängenden Bekleidungsstück im Bereich derjenigen Weiche 16 detektierbar ist, an der er zur Durchführung der Sortierung auf die entsprechende Speicherstrecke 14 geleitet wird.

Erfindungsgemäß ist die Leseeinrichtung 20 so ausgebildet, dass sie mit einer Frequenz von mindestens 1 MHz arbeitet. Bevorzugt liegt die Frequenz über 10 MHz, insbesondere im Bereich von 13,5 MHz. Bei dieser Frequenz handelt es sich um die Übertragungsfrequenz, womit die Daten aus dem Datenspeicher 21 ausgelesen werden. Mit dieser Frequenz arbeiten insbesondere die Antenne 23 und/oder das Lesegerät 22. Die relativ hohe Frequenz, insbesondere Übertragungsfrequenz, führt dazu, dass die Daten aus dem Datenspeicher 21 dicht aufeinanderfolgender Transportbügel 11 zuverlässig ausgelesen werden können, weil die mit einer solchermaßen hohen Frequenz arbeitende Leseeinrichtungen 20 alle erforderlichen Daten aus dem jeweiligen Datenspeicher 21 am betreffenden Transportbügel 11 in sehr kurzer Zeit auslesen kann.

Ausgewählten Schienenabschnitten 18 des Schienensystems 10, insbesondere der Umlaufstrecke 13, sind Antriebsstränge 17 zugeordnet. Im gezeigten Ausführungsbeispiel weist jede Weiche 16 und der Bereich der Leseeinrichtung 20 einen Antriebsstrang 17 auf. Die einzelnen Antriebsstränge 17 sind synchronisiert. Alternativ kann aber auch ein einziger Antriebsstrang 17 sich durchgehend über die Bereiche der Leseeinrichtung 20 und aller Weichen 16 erstrecken. Jeder Antriebsstrang 17 weist vorstehende Mitnehmer 26 auf. Erfindungsgemäß sind die Mitnehmer 26 in einem geringen Abstand aufeinanderfolgend am Antriebsstrang 17 angeordnet. Der Abstand zwischen allen Mitnehmern 26 ist vorzugsweise gleich. Der Abstand der Mitnehmer 26 legt gleichzeitig den Abstand fest, mit dem die Transportbügel 11 im Bereich der Antriebsstränge 17 aufeinanderfolgen. Bei der erfindungsgemäßen Vorrichtung ist vorgesehen, dass der Abstand zwischen aufeinanderfolgenden Mitnehmern 26 maximal 180 mm beträgt. Vorzugsweise liegt der Abstand im Bereich zwischen 50 mm und 150 mm. Beim hier gezeigten Ausführungsbeispiel ist ein Abstand zwischen aufeinanderfolgenden Mitnehmer 26 von etwa 100 mm vorgesehen. Aufgrund des erfindungsgemäß geringen Abstands der Mitnehmer 26 kann das Schienensystem 10 eine erheblich größere Anzahl von Transportbügeln 11 mit daran hängenden Bekleidungsstücken aufnehmen als das bei bekannten Vorrichtungen der Fall ist. Damit erhöht sich auch die Sortierleistung. Diese kann bis zu 300 Bekleidungsstücke pro Minute betragen. Bei der gezeigten Vorrichtung liegt die Sortierleistung im Bereich von 230 bis 270 Bekleidungsstücke pro Minute.

Erfindungsgemäß wird die Erhöhung der Sortierleistung erreicht durch den geringen Abstand der aufeinanderfolgenden Transportbügel 11 mit den daran hängenden Bekleidungsstücken und dem Betrieb der Leseeinrichtung 20, insbesondere der Antenne 23, mit einer relativ hohen Frequenz, insbesondere Übertragungsfrequenz, von mindestens 1 MHz, vorzugsweise über 10 MHz. Dadurch kommt es zur Erhöhung der Sortierleistung, ohne dass die Transportgeschwindigkeit der Transportbügel 11 mit den daran hängenden Bekleidungsstücken längs der Schienenabschnitte 18 des Schienensystems 10 gegenüber bekannten Vorrichtungen erhöht werden muss.

Bei der hier gezeigten Vorrichtung sind die Antriebsstränge 17 über den Schienenabschnitten 18 angeordnet, und zwar so, dass die nach unten ragenden Mitnehmer 26 sich oben auf den Schienenabschnitt 18 entlangbewegen und dabei unter Anlage an den Bügelhaken 19 die Transportbügel 11 in Förderrichtung weiterbewegen (Fig. 5).

Die Mitnehmer sind so ausgebildet, dass sie in ihrer zum Schienenabschnitt 18 weisenden Unterseite eine Ausnehmung aufweisen, die etwas größer ist als der Querschnitt des Bügelhakens 19, so dass die Mitnehmer 26 die Abstände zwischen aufeinanderfolgenden Transportbügeln 11 mit darauf hängenden Bekleidungsstücken in entgegengesetzten Richtungen, also in Förderrichtung gegen die Förderrichtung, fixieren. Die Abstände der Transportbügel 11 können sich dadurch während des Weitertransports längs des Schienensystems 10 weder nennenswert vergrößern noch verkleinern.

Im Bereich jeder der gleich ausgebildeten Weichen 16 weist das Schienensystem 10 einen Schlitz 27 auf. Der Schlitz 27 unterbricht somit im Bereich jeder Weiche 16 das Schienensystem 10, indem er von den benachbarten Enden 28 aufeinanderfolgender Schienenabschnitte 18 begrenzt wird. Der Schlitz 27 ist erfindungsgemäß sehr schmal, weist nämlich nur eine Breite auf, die ausreicht, um einen Bügelhaken 19 hindurchzulassen, aber deutlich kleiner ist als der Abstand zwischen zwei Transportbügeln 11, beispielsweise kleiner als der halbe Abstand der Transportbügel 11 ist. Im gezeigten Ausführungsbeispiel verläuft der Schlitz 27 geneigt zur Längsrichtung der Schienenabschnitte 18, und zwar so, dass er nach unten in Transportrichtung voreilt. Die Bügelhaken 19 werden somit beim Hindurchtritt durch den Schlitz 27 vom Schlitz in Transportrichtung weiterbewegt.

Der Schlitz ist wahlweise überbrückbar und freigebbar durch einen Schieber 29. Der Schieber 29 ist so ausgebildet, dass er in den hohlen, rohrförmigen Schienen liegt. Der Querschnitt des Schiebers 29 entspricht dadurch dem inneren Hohlraum der jeweiligen Schiene. Im gezeigten Ausführungsbeispiel sind die Schienen im Bereich des Schiebers 29 an der Unterseite offen, so dass der Schieber 29 gegenüber der unten offenen Schiene etwas vorsteht. Um die Masse des Schiebers 29 möglichst gering zu halten, ist dieser aus einem leichten Material, insbesondere Kunststoff oder Aluminium, gebildet. Zur weiteren Gewichtsverringerung kann der Schieber 29 mindestens teilweise hohl sein. Der Schieber 29 ist im Inneren des hohlen Rohrs geführt. Er kann zusätzlich über weitere, äußere Führungen verfügen. Dadurch wird sichergestellt, dass der Schieber 29 auf einer geraden Bewegungsbahn entlang der Längsachse der Schienenabschnitte 18 auf beiden Seiten des jeweiligen Schlitzes 27 verschiebbar ist.

Das Verschieben des Schiebers 29 in die den Schlitz 27 freigebende Stellung und die Schlitz 27 verschließende Stellung erfolgt durch ein schnelles Betätigungsorgan. Dieses ist im gezeigten Ausführungsbeispiel von einem Pneumatikzylinder 30 gebildet. Der Pneumatikzylinder 30 ist so kurz wie möglich ausgebildet, nämlich so, dass sein Hub gerade ausreicht, um den Schieber 29 so weit zu bewegen, dass er entweder den Schlitz 27 vollständig freigibt oder ihn überbrückt. Des Weiteren ist der Pneumatikzylinder 30 so ausgebildet, dass er nur ein geringes Luftvolumen benötigt, um von der eingefahrenen in die ausgefahrene Stellung und umgekehrt bewegt zu werden. Der Pneumatikzylinder 30 kann sowohl einfach- als auch doppeltwirkend ausgebildet sein. Im erstgenannten Falle ist nur Druckluft zur Betätigung des Pneumatikzylinders 30 in einer Richtung erforderlich. In die entgegengesetzte Richtung wird der Pneumatikzylinder selbsttätig durch eine Feder bewegt.

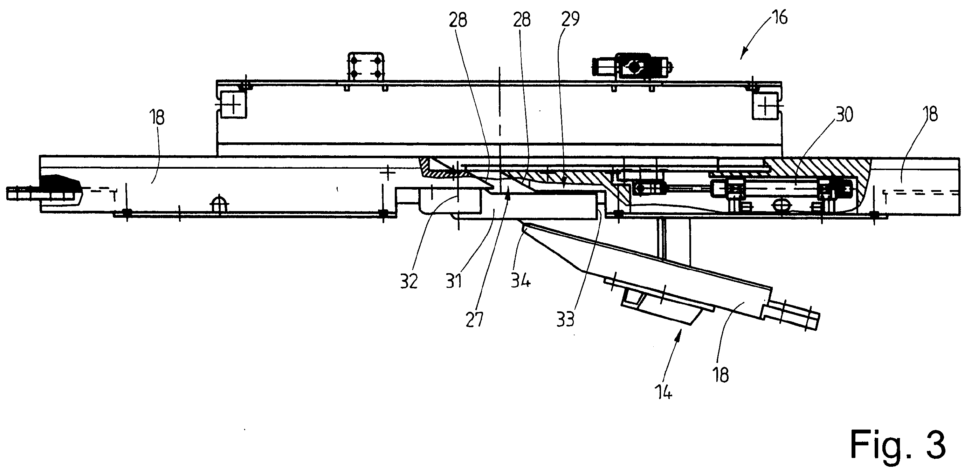

Unter dem Schlitz 27 ist ein selbsttätiges Überleitmittel angeordnet, das im gezeigten Ausführungsbeispiel als eine längliche Zunge 31 ausgebildet ist. Die Zunge 31 ist an einem in Transportrichtung vorderen Ende um eine Drehachse 32 schwenkbar. Die Drehachse 32 ist in mindestens einer Richtung leicht schräggerichtet. Im gezeigten Ausführungsbeispiel verläuft die Drehachse 32 in einer quer durch die Längsachse des Schienenabschnitts 18 verlaufenden Ebene schräggerichtet. Dadurch senkt sich das der Drehachse 32 gegenüberliegende freie (hintere) Ende 33 der Zunge 31 beim Verschwenken derselben ab. Die Neigung der Drehachse 32 ist an die Richtung der unter einem spitzen Winkel von den Schienenabschnitten 18 der Umlaufstrecke 13 abzweigenden Speicherstrecke 14 angepasst, indem beim Verschwenken der Zunge 31 das freie Ende 33 derselben vor das zum Schienenabschnitt 18 der Umlaufstrecke 13 weisende Ende des Schienenabschnitts 18 der jeweiligen Speicherstrecke 14 gelangt. Dieses Ende 34 des Schienenabschnitts 18 der Speicherstrecke 14 befindet sich unterhalb der Schienenabschnitte 18 der Umlaufstrecke 13, so dass das freie Ende 33 der Zunge 31 durch eine überlagerte horizontale und vertikale Schwenkbewegung vor das Ende 34 der Speicherstrecke 14 gelangt. Dadurch wird die Zunge 31 selbsttätig vor das Ende 34 der Speicherstrecke 14 geschwenkt, wenn ein ein Bekleidungsstück tragender Transportbügel 11 mit einem Bügelhaken 19 nach dem Hindurchtreten durch den Schlitz 27 auf die Zunge 31 gelangt. Die Weiche 16 benötigt somit keinen Antrieb für die Zunge 31, um einen Transportbügel 11 mit einem daran hängenden Bekleidungsstück von dem Schienenabschnitt 18 der Umlaufstrecke 13 zum Schienenabschnitt 18 der davon schräg abzweigenden, tieferliegenden Speicherstrecke 14 zu überführen. Das Zurückbewegen der Zunge 31 in die horizontale Ausgangsstellung (Fig. 3) unter den aufeinanderfolgenden Schienenabschnitten 18 der Umlaufstrecke 13 erfolgt ebenfalls selbsttätig durch eine Feder oder ein sonstiges Kraftspeicherorgan. Die Feder wird vom Gewicht des Transportbügels 11 mit dem daran hängenden Bekleidungsstück beim Verschwenken der Zunge 31 vor das Ende 34 des Streckenabschnitts 18 der Speicherstrecke 14 vorgespannt. Diese Federvorspannung bewegt die Zunge 31 in die Ausgangsstellung zurück, nachdem der Bügelhaken 19 des Transportbügels 11 von der Zunge 31 auf den Schienenabschnitt 18 der Speicherstrecke 14 gerutscht ist.

Das erfindungsgemäße Verfahren läuft folgendermaßen ab:
Transportbügel 11 mit darauf aufgehängten Bekleidungsstücken werden nach und nach längs der Beladestrecke 12 in die Umlaufstrecke 13 eingeschleust. Auf der Umlaufstrecke 13 werden die Transportbügel 11 mit daran hängenden Bekleidungsstücken mit geringen Abständen zueinander, und zwar vorzugsweise etwa 100 mm, in Richtung der Pfeile 35 (Fig. 1) weitertransportiert.

Bevor die Transportbügel 11 auf der Umlaufstrecke 13 die erste Weiche 16 erreichen, werden die Transportbügel 11 mit den daran hängenden Bekleidungsstücken während eines kontinuierlichen Weitertransports nach und nach an der vor der ersten Weiche 16 angeordneten Lesevorrichtung 20 vorbeitransportiert. In der Leseeinrichtung 20 werden von der Antenne 23 die zur Sortierung benötigten Daten aus dem Datenspeicher 21 des jeweiligen Transportbügels 11 nach und nach ausgelesen, und zwar ohne dass dabei der kontinuierliche Weitertransport der Transportbügel 11 auf der Umlaufstrecke 13 unterbrochen wird. Die Antenne 23 arbeitet mit einer sehr hohen Frequenz von mindestens 1 MHz, vorzugsweise etwa 13,5 MHz, wodurch sie trotz der dichten Aufeinanderfolge der Transportbügel 11 aus den Datenspeichern 21 derselben, oder auch Datenspeichern der an den Transportbügeln hängenden Bekleidungsstücke, die relevanten Daten innerhalb kürzester Zeit zuverlässig auslesen kann. Von der Antenne 23 werden die Daten an das Lesegerät 22 übertragen. Das Lesegerät 22 gibt die Daten dann an die Steuerung weiter, womit auch der Initiator 24 verknüpft ist. Der Initiator 24 gibt der Antenne 23 bzw. dem Lesegerät 22 ein Signal, um vom momentan sich am dichtesten an der Antenne 23 befindenden Transportbügel 11 oder Bekleidungsstück die relevanten Daten auszulesen. Vorzugsweise nimmt der Initiator 24 gleichzeitig eine Zuordnung der ausgelesenen Daten zum jeweiligen Transportbügel 11 vor, so dass die Steuerung weiß, wo sich dieser Transportbügel 11 befindet, insbesondere wann der betreffende Transportbügel 11 die jeweilige Weiche 16 erreicht hat.

Wenn zum Beispiel die von der Leseeinrichtung 20 aus dem jeweiligen Datenspeicher 21 ausgelesenen Daten, die für die Sortierung relevant sind, ergeben, dass der Transportbügel 11 mit dem jeweiligen Bekleidungsstück in die in der Fig. 1 erste Speicherstrecke 14 einzusortieren ist, wird kurz bevor der Transportbügel 11 die Weiche 16 vor der ersten Speicherstrecke 14 erreicht hat, aber der vorangehende Transportbügel 11 die Weiche 16 schon passiert hat, von der Steuerung der Weiche 16 betätigt. Die Steuerung kennt die Position der Weiche 16, nämlich ihren Abstand von der Leseeinrichtung 20. Dieser beträgt vorzugsweise ein ganzzahliges Vielfaches des Abstands aufeinanderfolgender Transportbügel 11. Durch den Initiator 24 oder auch einen Wegaufnehmer des Antriebs des Antriebsstrangs 17, erhält die Steuerung ein Signal, wenn die Weiche 16 betätigt werden kann, um das am betreffenden Transportbügel 11 hängende Bekleidungsstück aus der Umlaufstrecke 13 auszuschleusen und dabei die Sortierung vorzunehmen durch Ableitung des betreffenden Transportbügels 11 mit dem daran hängenden Bekleidungsstück von der Umlaufstrecke 13 in die erste Speicherstrecke 14.

Kurz bevor der Bügelhaken 19 des betreffenden Transportbügels 11 den Schlitz 27 der ersten Weiche 16 erreicht hat, wird der Schieber 29 in Transportrichtung vorbewegt und dadurch der Schlitz 27 geöffnet. Der Bügelhaken 19 des Transportbügels 11 gelangt dann durch den Schlitz 29 auf die darunterliegende Zunge 31, die sich zu diesem Zeitpunkt noch in der Ausgangsstellung befindet, indem sie in Längsrichtung der Schienenabschnitte 18 verläuft. Durch das Eigengewicht des Transportbügels 11 mit dem darauf hängenden Bekleidungsstück wird die Zunge 31 um die Drehachse 32 zur Seite verschwenkt und dabei das freie Ende 33 desselben abgesenkt, so dass dieses vor das Ende 34 des Schienenabschnitts 18 der Speicherstrecke 14 gelangt. An der durch das Verschwenken eine schräg abwärts gerichtete Position eingenommenen Zunge 31 gleitet der Transportbügel 11 mit dem daran hängenden Bekleidungsstück auf seinem Bügelhaken 19 ab auf den Schienenabschnitt 18 der ersten Speicherstrecke 14. Während dieses Abgleitens des Bügelhakens 19 auf der zur Seite bewegten und zum freien Ende 33 hin schräg abfallenden Zunge 31 wird vom Schieber 29 der Schlitz 27 bereits wieder geschlossen, damit der nächste Transportbügel 11 mit einem Bekleidungsstück, das nicht auf die erste Speicherstrecke 14 gehört, in Transportrichtung längs der Umlaufstrecke 13 weitertransportiert werden kann.

Nachdem der Bügelhaken 19 des Transportbügels 11 vom freien Ende 33 der Zunge 31 heruntergerutscht ist, wird die vom Eigengewicht des Transportbügels 11 mit dem daran hängenden Bekleidungsstück erzeugte Federvorspannung der Feder der Zunge 31 ausgenutzt, um die Zunge 31 zurückzubewegen in die Ausgangsstellung, in der die Zunge 31 erneut in Transportrichtung verlaufend und wieder horizontal ausgerichtet unter den Schienenabschnitten 18 der Umlaufstrecke 13 gelangt.

### Bezugszeichenliste:

- 10: Schienensystem
- 11: Transportbügel
- 12: Beladestrecke
- 13: Umlaufstrecke
- 14: Speicherstrecke
- 15: Rückführstrecke
- 16: Weiche
- 17: Antriebsstrang
- 18: Schienenabschnitt
- 19: Bügelhaken
- 20: Leseeinrichtung
- 21: Datenspeicher
- 22: Lesegerät
- 23: Antenne
- 24: Initiator
- 26: Mitnehmer
- 27: Schlitz
- 28: Ende
- 29: Schieber
- 30: Pneumatikzylinder
- 31: Zunge
- 32: Drehachse
- 33: freies Ende
- 34: Ende
- 35: Pfeil

## Patentansprüche

1. Verfahren zum Sortieren von an Transportbügeln (11) hängenden Bekleidungsstücken mit einer Vorrichtung nach Anspruch 6, wobei die Transportbügel (11) mit einer solchen Transportgeschwindigkeit kontinuierlich an der Leseeinrichtung (20) vorbeitransportiert werden, dass die Daten aus den Datenspeichern (21) von bis zu 300 Transportbügel pro Minute kontinuierlich von der Leseeinrichtung (20) ausgelesen werden können

2. Verfahren nach Anspruch 1, **dadurch gekennzeichnet, dass** die Transportbügel (11) mit geringem Abstand an der Leseeinrichtung (20) vorbeitransportiert werden, vorzugsweise die Transportbügel (11) mit einem Abstand von maximal 180 mm, insbesondere 50 mm bis 150 mm, an der jeweiligen Leseeinrichtung (20) vorbeibewegt werden.

3. Verfahren nach Anspruch 1 oder 2, **dadurch gekennzeichnet, dass** von der Leseeinrichtung (20) die zum Sortieren der Bekleidungsstücke benötigten Daten während des kontinuierlichen Weitertransports der Transportbügel (11) aus den Datenspeicher (21) des jeweiligen Transportbügels (11) ausgelesen werden.

4. Verfahren nach einem der vorhergehenden Ansprüche, **dadurch gekennzeichnet, dass** die Transportbügel (11) mit einer solchen Transportgeschwindigkeit kontinuier2011013055.doc lich an der Leseeinrichtung (20) vorbeitransportiert werden, dass die Daten aus den Datenspeichern (21) von 150 bis 250 Transportbügel pro Minute kontinuierlich von der Leseeinrichtung (20) ausgelesen werden können.

5. Verfahren nach einem der vorhergehenden Ansprüche, **dadurch gekennzeichnet, dass** die Transportbügel (11) im gleichen geringen Abstand, womit sie an der Leseeinrichtung (20) entlang transportiert werden, an Weichen (16) zum Ausschleusen von Transportbügeln (11) mit daran hängenden Bekleidungsstücken entlang bewegt werden.

6. Vorrichtung zum Sortieren von an Transportbügeln (11) hängenden Bekleidungsstücken, mit einem Schienensystem (10), an dem die Transportbügel (11) entlangbewegbar sind, mindestens einer Leseeinrichtung (20) zum Auslesen relevanter Daten aus einem dem jeweiligen Transportbügel (11) oder dem daran hängenden Bekleidungsstück zugeordneten Datenspeicher (21) und Weichen (16) zum Ausschleusen einzelner Transportbügel (11) mit daran hängenden Bekleidungsstücken, wobei die Leseeinrichtung (20) eine Arbeitsfrequenz von mindestens 1 MHz aufweist, **dadurch gekennzeichnet, dass** der Leseeinrichtung (21) ein Initiator (24) zugeordnet ist, der zum einen dazu dient, das Auslesen relevanter Daten aus einem bestimmten Datenspeicher zu starten, und zum anderen dazu führt, dass sich die ausgelesenen Daten dem dazugehörenden Transportbügel und dem darauf hängenden Bekleidungsstück zuordnen lassen.

7. Vorrichtung nach Anspruch 6, **dadurch gekennzeichnet, dass** das Schienensystem (10) mindestens ein Antriebsstrang (17) aufweist, der zum Weitertransport der Transportbügel (11) mit geringem Abstand längs mindestens ausgewählter Bereiche des Schienensystems (10) ausgebildet ist, wobei vorzugsweise der jeweilige Antriebsstrang (17) Mitnehmer (26) für die Transportbügel (11) mit einem Abstand von maximal 180 mm, insbesondere 50 mm bis 150 mm, aufweist.

8. Vorrichtung nach Anspruch 6 oder 7, **dadurch gekennzeichnet, dass** die Leseeinrichtung (20) eine Antenne (23) und ein Lesegerät (22) aufweist, wobei insbesondere die Antenne (23) neben einer Schiene bzw. einem Schienenabschnitt (18) des Schienensystems (10) angeordnet ist, vorzugsweise derart, dass die Leseeinrichtung (20), insbesondere die Antenne (23), zum Sortieren relevante Daten aus einem sich am nächsten an der Leseeinrichtung (20), insbesondere der Antenne (23), befindlichen Transportbügel (11) bzw. einem daran hängenden Bekleidungsstück ausliest.

9. Vorrichtung nach einem der vorhergehenden Ansprüche, **dadurch gekennzeichnet, dass** die Leseeinrichtung (20), mindestens die Antenne (23) derselben, neben einer Schiene bzw. einem Schienenabschnitt (18) des Schienensystems (10) angeordnet ist zum Auslesen von für das Sortieren relevanter Daten aus dem Datenspeicher (21) zwischen zwei dicht aufeinanderfolgenden Transportbügeln (11).

## Claims

1. Method for sorting items of clothing hanging on transport hangers (11) with a device according to Claim 6, wherein the transport hangers (11) are continuously transported past the reading device (20) at such a transporting speed that the data from the data memories (21) of up to 300 transport hangers per minute can be read out continuously by the reading device (20).

2. Method according to Claim 1, **characterized in that** the transport hangers (11) are transported past the reading device (20) at close intervals, preferably the transport hangers (11) are moved past the respective reading device (20) at intervals of at most 180 mm, in particular 50 mm to 150 mm.

3. Method according to Claim 1 or 2, **characterized in that** the data required for sorting the items of clothing are read out by the reading device (20) from the data memory (21) of the respective transport hanger (11) during the continuous further transport of the transport hangers (11).

4. Method according to one of the preceding claims, **characterized in that** the transport hangers (11) are continuously transported past the reading device (20) at such a transporting speed that the data can be read out continuously by the reading device (20) from the data memories (21) of 150 to 250 transport hangers per minute.

5. Method according to one of the preceding claims, **characterized in that** the transport hangers (11) are moved with the same close intervals with which they are transported along the reading device (20) along diverters (16) for discharging transport hangers (11) with items of clothing hanging on them.

6. Device for sorting items of clothing hanging on transport hangers (11), with a rail system (10), along which the transport hangers (11) can be moved, at least one reading device (20) for reading out relevant data from a data memory (21) assigned to the respective transport hanger (11) or the item of clothing hanging on it and diverters (16) for discharging individual transport hangers (11) with items of clothing hanging on them, wherein the reading device (20) has an operating frequency of at least 1 MHz, **characterized in that** the reading device (21) is assigned an initiator (24), which on the one hand serves for starting the reading out of relevant data from a specific data memory, and on the other hand leads to the data that have been read out being assigned to the associated transport hanger and the item of clothing hanging on it.

7. Device according to Claim 6, **characterized in that** the rail system (10) has a least one drive strand (17), which is designed for the further transport of the transport hangers (11) at close intervals along at least selected regions of the rail system (10), wherein the respective drive strand (17) preferably has drivers (26) for the transport hangers (11) at intervals of at most 180 mm, in particular 50 mm to 150 mm.

8. Device according to Claim 6 or 7, **characterized in that** the reading device (20) has an antenna (23) and a reader (22), wherein in particular the antenna (23) is arranged next to a rail or a portion of rail (18) of the rail system (10), preferably in such a way that, for sorting, the reading device (20), in particular the antenna (23), reads out relevant data from a transport hanger (11), or an item of clothing hanging on it, located nearest the reading device (20), in particular the antenna (23).

9. Device according to one of the preceding claims, **characterized in that** the reading device (20), at least the antenna (23) of the same, is arranged next to a rail or a portion of rail (18) of the rail system (10) for reading out data relevant for the sorting from the data memory (21) between two transport hangers (11) following closely one after the other.

## Revendications

1. Procédé de tri de pièces d'habillement suspendues à des cintres transport (11), comprenant un dispositif selon la revendication 6, dans lequel les cintres de transport (11) sont transportés en continu devant le dispositif de lecture (20) à une vitesse de transport telle que les données provenant des mémoires de données (21) de jusqu'à 300 cintres de transport par minute puissent être lues en continu par le dispositif de lecture (20).

2. Procédé selon la revendication 1, **caractérisé en ce que** les cintres de transport (11) sont transportés à faible distance devant le dispositif de lecture (20), de préférence les cintres de transport (11) sont transportés devant le dispositif de lecture respectif (20) à une distance de 180 mm au maximum, en particulier de 50 mm à 150 mm.

3. Procédé selon la revendication 1 ou 2, **caractérisé en ce que** les données nécessaires pour le tri des pièces d'habillement sont lues par le dispositif de lecture (20) pendant la poursuite du transport en continu des cintres de transport (11) depuis la mémoire de données (21) du cintre de transport respectif (11).

4. Procédé selon l'une quelconque des revendications précédentes, **caractérisé en ce que** les cintres de transport (11) sont transportés devant le dispositif de lecture (20) à une vitesse de transport telle que les données provenant des mémoires de données (21) de 150 à 250 cintres de transport par minute puissent être lues en continu par le dispositif de lecture (20).

5. Procédé selon l'une quelconque des revendications précédentes, **caractérisé en ce que** les cintres de transport (11), avec la faible distance identique avec laquelle ils sont transportés le long du dispositif de lecture (20), sont déplacés le long d'aiguillages (16) pour évacuer des cintres de transport (11) avec des pièces d'habillement suspendu à ceux-ci.

6. Dispositif de tri de pièces d'habillement suspendues à des cintres de transport (11), comprenant un système de rail (10) le long duquel les cintres de transport (11) peuvent être déplacés, au moins un dispositif de lecture (20) pour lire des données pertinentes à partir d'une mémoire de données (21) associée au cintre de transport respectif (11) ou à la pièce d'habillement suspendue à celui-ci, et des aiguillages (16) pour évacuer des cintres de transport individuels (11) avec les pièces d'habillement suspendues à ceux-ci, le dispositif de lecture (20) présentant une fréquence de travail d'au moins 1 MHz, **caractérisé en ce qu'**au dispositif de lecture (21) est associé un dispositif d'initiation (24) qui sert d'une part à démarrer la lecture de données pertinentes à partir d'une mémoire de données déterminée, et qui fait en sorte d'autre part que les données lues puissent être associées au cintre de transport lui appartenant et à la pièce d'habillement suspendue à celui-ci.

7. Dispositif selon la revendication 6, **caractérisé en ce que** le système de rail (10) présente au moins une chaîne cinématique (17) réalisée pour la poursuite du transport des cintres de transport (11) à faible distance le long d'au moins des régions sélectionnées du système de rail (10), la chaîne cinématique respective (17) présentant de préférence des dispositifs d'entraînement (26) pour les cintres de transport (11) à une distance de 180 mm au maximum, en particulier de 50 mm à 150 mm.

8. Dispositif selon la revendication 6 ou 7, **caractérisé en ce que** le dispositif de lecture (20) présente une antenne (23) et un appareil de lecture (22), l'antenne (23) étant disposée notamment à côté d'un rail ou d'une section de rail (18) du système de rail (10), de préférence de telle sorte que le dispositif de lecture (20), en particulier l'antenne (23), lise pour le tri des données pertinentes à partir d'un cintre de transport (11) ou d'une pièce d'habillement suspendue à celui-ci, se trouvant le plus proche du dispositif de lecture (20), en particulier de l'antenne (23).

9. Dispositif selon l'une quelconque des revendications précédentes, **caractérisé en ce que** le dispositif de lecture (20), en particulier son antenne (23), est disposé (e) à côté d'un rail ou d'une section de rail (18) du système de rail (10) pour la lecture de données pertinentes pour le tri à partir de la mémoire de données (21), entre deux cintres de transport étroitement successifs (11).
